# EUROPEAN PATENT APPLICATION

(11) **EP 0 935 923 A1**
(43) Date of publication of application: **18.08.1999**
(21) Application number: 99200346.7
(22) Date of filing: 09.02.1999
(51) Int. Cl.: A22C 25/17, A22C 25/16

(54) **Skinning machine for fishfillets**

(30) Priority: 11.02.1998 NL 1008275
(71) Applicant: M. Fieret Handelsonderneming C.V., 3771 AH Barneveld (NL)
(72) Inventor: Fieret, Maarten, M. Fieret Handelsonderneming C.V., 3771 AH Barneveld (NL)
(74) Representative: Ferguson, Alexander

(57) **Abstract**

Skinning machine for fish pieces consisting of two fish fillets that are beheaded, initially connected to each other by means of the dorsal fin root, with or without tail, comprising means for skinning the fish fillets and means for conveying (2) the fish pieces to and along the skinning means, the skinning means comprising a knife (3) placed transverse to the conveyance direction above the conveyance means, as well as means placed just above (4) the knife for engaging the skin of the fish fillet halves and pulling the skin along the knife in diverging directions in relation to each other with a horizontal directional component which is normal to the conveyance direction.

## Description

The invention relates to a skinning machine for fish for skinning double fillets of fish, especially herrings, but also whitefish, which have earlier been beheaded and stripped of a main bone and are supplied on a conveyor belt unfolded, as double fillet. The double fillets have or have not been stripped of their tails and remain connected to each other by means of their dorsal fin root. Such double fillets are also called fish pieces.

There are many skinning machines already for such fish pieces. European patent 0.463.701 and Dutch patent applications 90.01435 and 90.02695 can be mentioned. In the devices known from these documents a cord moves along with the conveyor belt to lift the dorsal fin root and thus effect a local pre-separation between skin and meat. The fish pieces are conveyed to a knife positioned just above the conveyor belt and extending transverse to the conveyance direction. Close above the knife a roll is arranged which is also positioned transversely and is provided with profilings to engage the skin of the fish pieces. As a result the skin is as it were pulled over the knife and subsequently lifted to some degree to be extracted by suction after that with the aid of a extractor hood positioned near the engagement roll. The skinned fish piece is conveyed along through under the knife.

Directly underneath the skin there is a layer of fat, which becomes thicker as the fish is frozen longer. Between the skin and the layer of fat there is a so-called silvery membrane or surface, which can give the skinned fish a pleasant look. It appeared that with the known skinning machines for fish fat is pulled along with the skin or scraped off by the knife. The separation skin/meat is not optimal there, as a result of which the silvery membrane is often absent.

The invention has the object to improve on this.

To that end the invention provides a skinning machine for fish pieces consisting of two fish fillets that are beheaded, initially connected to each other by means of the dorsal fin root, with or without tail, comprising means for skinning the fish fillets and means for conveying the fish piece to and past the skinning means, the skinning means comprising a knife placed transverse to the conveyance direction above the conveyance means, as well as means placed just above the knife for engaging the skin of the fish piece and pulling the skin past the knife in diverging directions in relation to each other with a horizontal directional component which is normal to the conveyance direction.

It appeared that with the use of the machine according to the invention the skin is pulled off without the silvery membrane and/or the layer of fat being pulled along partially or in its entirety. Without the applicant wanting to tie himself down to a theory regarding this, it is supposed that the resulting directions of the pulling forces exerted on the skin better suit the structure of the outer layer of the fish pieces. The skin is engaged here at the head side and on both sides of the dorsal fin root and subsequently pulled off from the layer of fat in rearward and sideward direction.

It is noted that from German patent application 29.05.518 a skinning machine for fish is known which instead of a straight, transverse knife is provided with two symmetrically positioned knives with oblique sideward and upstream oriented cutting edges. It appeared that with such obliquely positioned knives abovementioned problems keep occurring with fish pieces which are provided with a layer of fat that is worth mentioning.

Preferably the skin engaging means comprise at least one roll, which for each fish fillet half is provided with elevations that are oblique in relation to the conveyance direction. With the engagement rolls that have been usual up until now the teeth are normal to the conveyance direction.

Preferably the elevations form series for each fish fillet half, which series mutually include an angle between 1-179° opening in upstream direction, preferably approximately 120°.

Preferably the elevations for both fish fillets are arranged on one and the same roll, which roll has an axis of rotation which is normal to the conveyance direction. In this way in a simple manner, with a few parts, the intended effects of the invention are realized.

The invention further relates to a method as described previously and in the claims.

The application further relates to a device for removing the backbone from beheaded fish, in particular roundfish such as for instance herring.

It is known to strip beheaded fish of their backbone in a machine provided with two circulating side conveyor belts positioned on both sides of the processing path and which engage the sides of the fish, with two circular knives with sharp cutting edges provided with notches, which knives are placed on both sides of the centre line of the processing path upwards and sloping towards each other (for instance at an angle of 23°), and with a bone receiver positioned at the highest point of the knives.

The bone receiver has a front edge which slopes obliquely rearward and downward, for forcing the backbone downwards out of the body of the fish. The bone receiver can be designed as a reversed U-profile which extends over the outer sides of the knives or as raised strip with sharp front edge situated between the knives.

Above the processing path a fixed, reversed V-shaped rod is placed for upward stopping and guiding the back of the fish. Below the processing path, upstream of the knives, a lower guide is furthermore positioned.

After feeding the fish straight up, with the beheaded end forward into the machine, the fish taking a position comparable to the swimming position, the fish is first stripped of the belly by a horizontal incision at the bottom side and subsequently, supported by the lower guide, conveyed to the knives by the side conveyor belts. These cutting knives start to cut the fish in the front, bottom area. When the front upper area of the front end of the fish has arrived at the cutting knives and thus also at the upstream extremity of the bone receiver the backbone is engaged by said bone receiver and then forced downwards, as a result of continuing conveyance of the fish by its engagement with the side conveyor belts. Simultaneously the abdomen with entrails is cut out by the cutting knives that cut on to both sides of the back bone.

An objection of the known machine is that the knives also cut through the bones that extend transverse and obliquely transverse from the backbone into the meat. As a result bones that are cut through remain left behind in the meat. With fishes with soft and fat meat this need not be a problem to the consumer, because the bones will mostly be soft as well and will hardly be noticed. This is different with lean fish, in which the bones will be more firm.

Manually removing the side bones left behind is a work of precision and unfeasible. Alternatively fatty fish can be manually stripped of the back bone, in which the side bones can be pulled along, but this leads to very high costs of labour. Moreover, suitable skilled personnel to that end is hard to come by.

It is an object of the invention to provide a device which improves on this.

From one aspect the invention to that end provides a device for removing the backbone from a beheaded fish, in particular roundfish such as for instance herring, comprising means for conveying the fish straight up with the beheaded end forward, means for loosening the belly during conveyance of the fish past there, which loosening means comprise two knives positioned obliquely upwards towards each other, which at least can extend to near the backbone and means for deflecting the backbone downwards out of the fish, the deflecting means being positioned to extend upstream of the knives.

In this way the backbone is engaged and already forced downwards before the knives cut the area of the back bone. The back bone can thus be guided from the meat taking along the side bones still attached thereto. The knives need not perform a particular cutting activity here.

In case of the processing of herring it is preferred that the deflecting means project upstream over a horizontal distance of approximately 1 to 2 cm.

The guiding of the backbone from the meat is promoted when the deflecting means have a pointed upstream end, with a substantially horizontal upper edge and a substantially obliquely downward extending lower edge, which has a concave course.

The angle between the upper edge and the lower edge at the extremity preferably is approximately 45°.

In a further development of the device according to the invention the knives are provided with a relatively blunt, continuing edge. In this way it is prevented that the knives could possibly cut through the upper side bones when they would after all move over them during removal of the backbone. The knives are blunt enough the keep the little bones in one piece but at the same time sharp enough to penetrate the meat.

Preferably the thickness of the edge is equal to or larger than approximately 0.5 mm. Furthermore it will be advantageous for the cutting activity when the knives are circular knives on which the edge merges radially to the inside into a circumferential concave edge area, of preferably approximately 15 mm wide. The concave edge area provides space to the meat which is pressed inwards by the side conveyor belts.

In a further development of the device according to the invention said device comprises means, positioned upstream of the deflecting means, for engaging the backbone and to push it up to the deflecting means. As a result the effectiveness of the deflecting means is increased. The engagement and push-up means ensure that the object to be removed itself -the backbone- is pushed in firm, effective engagement with the bone receiver.

The push-up means preferably comprise a circumferential driven disc provided with teeth, which is arranged substantially vertical with the axis of rotation normal to the processing direction. The teeth simply rotate in the abdomen until in engagement with the backbone.

The teeth preferably are each provided with a recess extending in circumferential direction for at least partially accommodating the backbone therein. In this way the backbone is sidewardly supported over a certain length, as a result of which the chances on sideward bending or buckling of the backbone, which has a relatively low bending strength in sideward direction, is reduced.

The penetration of the teeth in the abdomen is promoted when the teeth are provided with bevelled outer sides.

Preferably means for guiding the upper side of the fish are present.

From another aspect the application provides a device for removing the backbone from beheaded fish, comprising means for conveying the fish straight up with the beheaded end forward, means for loosening the belly during conveyance of the fish past there, which loosening means comprise two circular knives positioned obliquely upwards towards each other, which at least can extend to near the backbone and means for deflecting the backbone downwards out of the fish, the cutting knives being provided with a relatively blunt continuous edge.

From yet another aspect the application provides a device for removing the backbone from beheaded fish, comprising means for conveying the fish straight up with the beheaded end forward, means for loosening the belly during conveyance of the fish past there, which loosening means comprise two knives positioned obliquely upwards towards each other, which at least can extend to near the backbone, and means for deflecting the backbone downwards out of the fish, furthermore comprising means positioned upstream of the deflecting means to engage the backbone and to push the backbone up to the deflecting means.

The invention will be elucidated below on the basis of a discussion of an exemplary embodiment shown in the attached drawings, in which:
Figure 1 shows a schematic perspective view on a skinning machine according to the invention;
Figure 2 shows a cross-section of a fish piece lying on the conveyor belt at the knife;
Figure 3 shows a top view from upstream side on the roll of the device of figure 2;
Figure 4 shows a schematic view of the way in which the engagement roll of the device according to figure 2 engages the fish skin;
Figure 5 shows a schematic side view on an important part of an exemplary embodiment of a device according to the application;
Figure 5A-5B show cross-sections through a toothed disc, and an eviscerating disc, respectively, accommodated in the device of figure 5;
Figure 6 shows a cross-section through a fish to be deboned by the device of figure 5;
Figure 7 shows the fish of figure 6 during the processing in a known deboning device;
Figure 8 shows a cross-section of the device of figure 5 during deboning a fish;
Figure 9 shows a cross-section through a fish during the processing with the device of figure 5; and
Figure 10 shows a cross-section through the area of engagement of a tooth of the toothed disc with the backbone of the fish to be deboned.

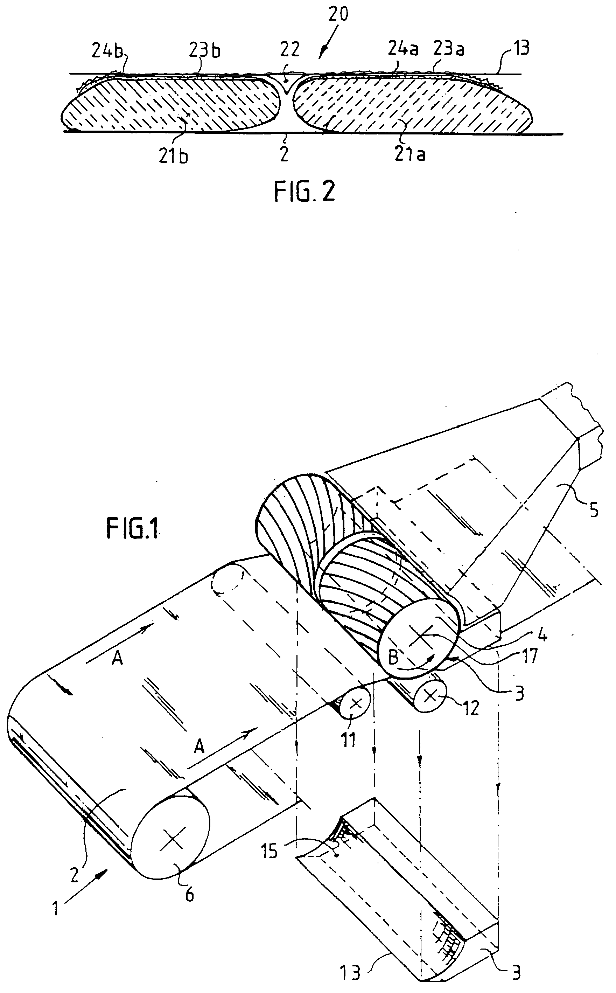

The skinning machine for fish 1 shown in figure 1 comprises a belt conveyor which is only partially shown and comprises a conveyor belt 2, which circulates around a driven end roll -not shown- and an end roll 6 running along. The conveyor belt 2 circulates in the direction A and over support rolls 11 and 12, under a knife 3 situated normal to the conveyance direction A and also under roll 4, which is driven in circumferential direction B and has a rotation centre line 17 normal to the conveyance direction A.

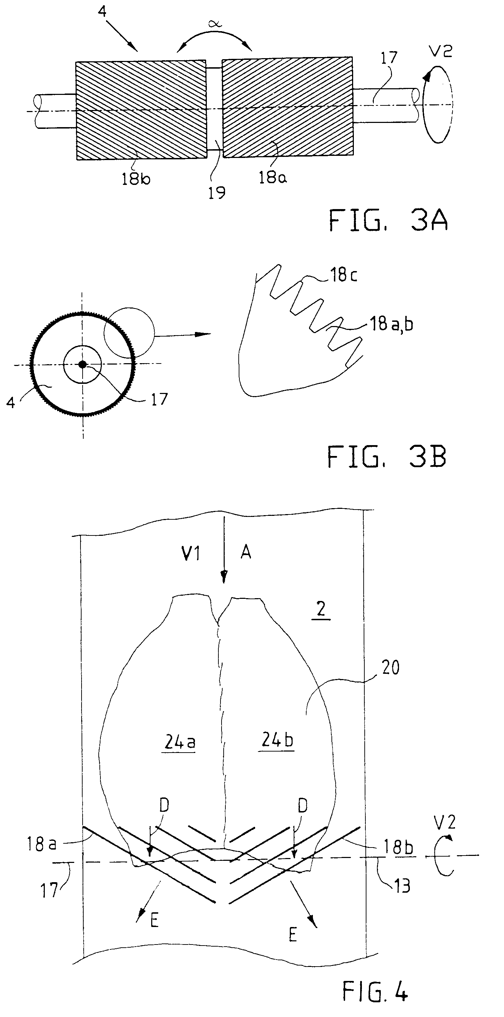

The knife 3 is placed with the cutting edge 13 at a small distance beneath the roll 16, for instance in case of herring at a distance of 0.03 mm and in case of whitefish at a distance of 0.08 mm. The drive of roll 4 is such that the peripheral velocity V₂ (see figure 4) is equal to the speed of the belt 2 (V₁).

The knife 3 is furthermore provided with a curved upper surface 15 suited to the circumference of the roll 4. Above the knife 3, with an inlet near the roll 4, a extractor hood 5 is placed, with which the skins and dorsal fin roots which are conveyed upwards between the knife and the roll by the roll 16 can be extracted by suction and discharged.

In figure 2 it is schematically shown, without roll 4, what the position is of cutting edge 13 in relation to a fish piece 20 conveyed on the belt 2. The fish piece 20 consists of two fillet halves 21a, 21b, which have been beheaded. The fillet halves 21a, 21b are connected to each other by means of a dorsal fin root 22. The skin 24a, 24b extends over the fillets 21a, 21b and the dorsal fin root 1. Underneath of it a layer of fat 23a, 23b is situated, which forms a silvery membrane at the side facing the skin.

When the fish piece has arrived at the roll 4 (diameter here 72 mm) with the head side forward, then the skin 24a, 24b is engaged by the profilings 18a, 18b arranged at the roll 4. These profilings 18a, 18b are, as can be seen in figure 3A, at an angle α from each other, which preferably is 120°. As can be seen in figure 3B the ribs 18a, 18b have a blunt engagement surface 18c with a width of 0.3 mm. In this way it is prevented that the skin is locally pressed in too much, as a result of which the layer of fat could be damaged. It can further be seen that the roll 4 is recessed in an intermediate area 19, as a result of which the dorsal fin root is not engaged, which is desired in case of soft herring, the back of which otherwise would be damaged too much. The dorsal fin root is then removed later. The ribs 18a, 18b have a circular pitch of 2 mm and a height of 1.5 mm.

When, as indicated in figure 4, the fish piece 20 is supplied on the conveyor belt 2 in the direction A with a speed V₁, then the front end of the fish piece 20 with the skin 24a, 24b will contact the ribs 18a, 18b of the roll 4 in the direction D. Said roll 4 is driven with a speed V₂, which is equal to the speed V₁, and pulls the skin 24a, 24b along over the knife. Because the ribs 18a, 18b are oblique, however, in relation to the centre line 17 and mutually include an angle which is smaller than 180° and opens in a direction counter to the direction A, a tensile force is exerted on the skin 24a, 24b in the directions E. At the continuation of the skinning process the skin 24a, 24b is pulled hereby off from the layer of fat 23a, 23b with a directional component in sideward direction. It appeared that in this way the layer of fat 23a, 23b and the silvery membrane situated thereon substantially remains intact.

With less soft herring the slit 19 can be absent and at the location be provided with a smooth surface.

The roll according to the invention can also be used in the skinning machine for fish described in the Dutch patent application 90.01643 and the Dutch patent application 90.02695. This regards skinning machines for fish for double fillets without or with, respectively, a tail, in which also the dorsal fin root is removed. The roll 4 and the knife 3 will in that case be provided in their centres with a passage for a cord which lifts the dorsal fin root.

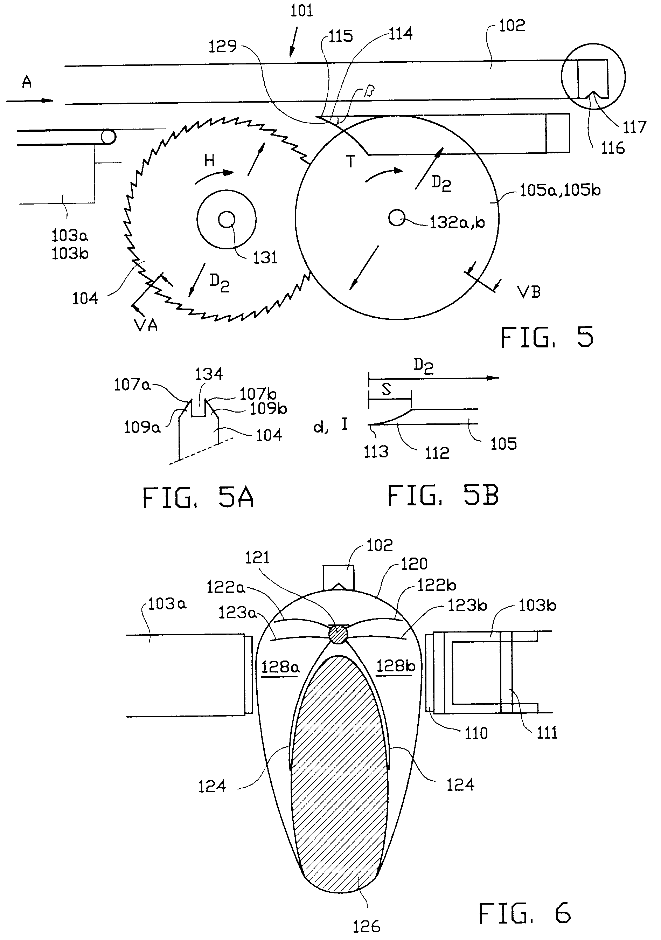

The portion 101 shown in figure 5 of a deboning machine which is not further shown is supported by a frame which is not shown. It will be understood that for the various moving parts the necessary drives are present.

Two conveyor belts 103a, 103b are schematically shown, which belts are destined to engage the sides of a fish which is to conveyed horizontally and straight up in the direction A. As can be seen in figure 6 the conveyor belts circulate, about driven pulleys 111 placed at the ends, and have an engagement surface 110.

The path to be covered by the fish is limited in upward direction by a guide 102, which in the lower surface 116 is provided with a substantially reversed C-shaped longitudinal notch 117.

Below the longitudinal guide 102, extending between the conveyor belt 103a and 103b, a toothed disc 104 is positioned on a driven shaft 131 for driving in the direction U. At the circumference the toothed disc 104 has a series of teeth 107 oriented in the direction of rotation, which -as can be seen in figure 5A- are formed by two teeth 107a, 107b provided with bevelled outer surfaces 109, which teeth between them define a rectangular slit 134. The diameter of the toothed disc 104 is about 14 cm.

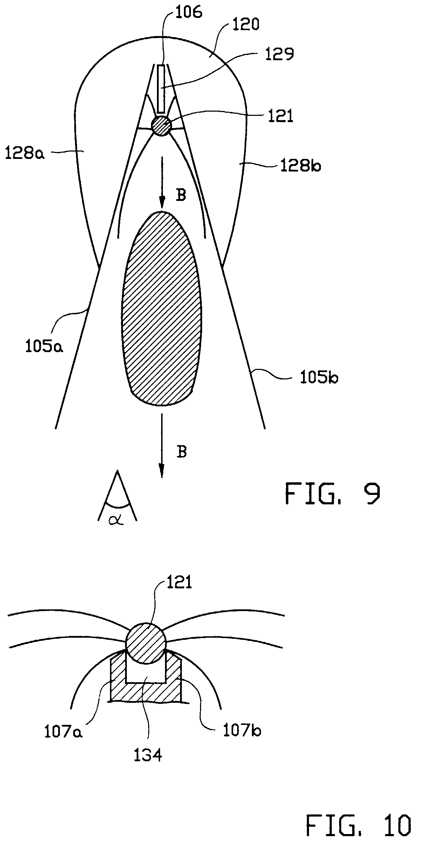

At the downstream side the toothed disc 104 extends between the two eviscerating discs 105a, 105b placed symmetrically in relation to the path the fish covers, which discs each are arranged on a driven shaft 132a, 132b for rotation in the direction T. As can be seen in figure 9 the discs 132a and 132b are in a vertical cross-sectional plane, normal to the path of the fish arranged at a downward opening angle α of preferably 23°. It is preferred here to be able to adjust that angle, by pivoting the drive shafts 132a, 132b in said vertical plane, for adjustment to deviating fish sizes and kinds. As can be seen in figure 5B each eviscerating disc 105a, 105b has an edge with an outer edge 113, which is relatively blunt and preferably has a thickness d₁ of 0.5 mm. Special furthermore is that the edge area S, which for instance can be 1.5 cm wide, has a concave surface 112. These concave edge areas 112 of the discs 105a, 105b are turned away from each other. The discs 105a, 105b here have a diameter of D₂ of 13.5 cm.

Special furthermore is that in the intermediate space on top between the discs 105a, 105b, a raised, flat deboning rod 106 positioned in processing direction is arranged, which has not have its point 115, however, as is known per se, surrounded on both sides by the discs 105a, 105b, but extends from them over a distance, for instance 1.5 cm. The rod 106 is furthermore provided in the front portion 114 with a front edge 129 protruding downwards at an sloping angle ß of preferably 45°, which edge preferably is concave.

In the schematical cross-section of figure 6 the conveyor belts 103a, 103b are shown with engagement surface 110 with which they move on the fish 120 in processing direction. At the upper side the fish 120 is kept confined by the longitudinal guide 102.

The fish 120 in schematical cross-section comprises of a backbone 121, with bones 122a, b, 123a, b, 124a, b projecting sideward from it. It is the intention that the meat fillets 128a, b are left over from the fish 120, which fillets together, after the fish 120 has been processed by this machine, form the fish pieces. Between the meat 128a, 128b, the abdomen 125 is situated, which is downwardly limited by the belly 126 and contains the entrails.

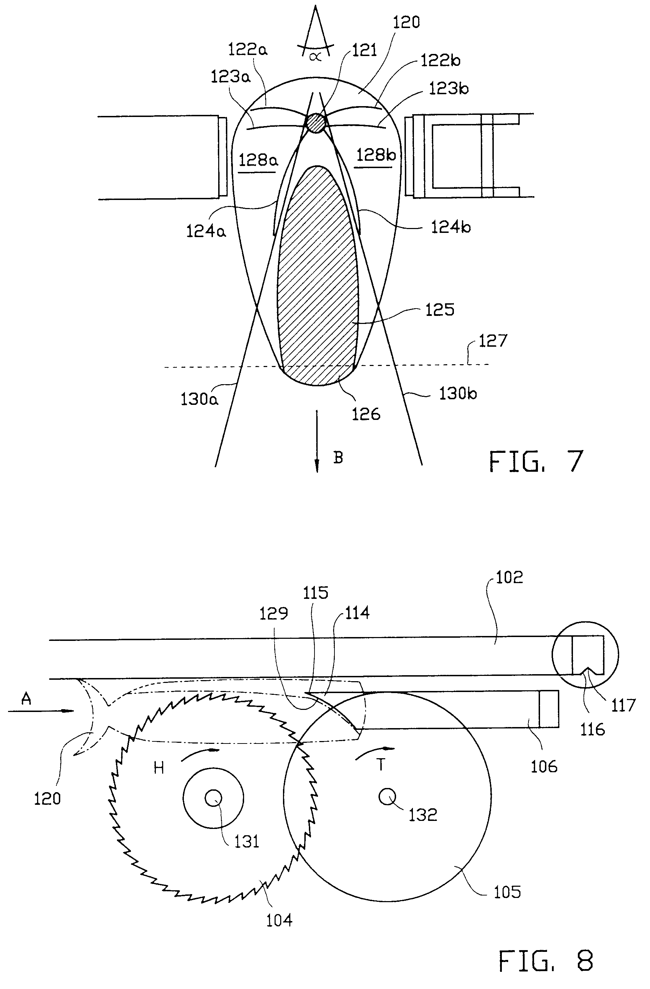

In the machines known up until now the abdomen 125 and the belly 126 as well as the bone 121 are removed according to the incisions shown in figure 7. First the belly 126 is cut off with the help of two horizontally positioned circular knives that are not further shown, which knives cut according to plane 127. The abdomen 125 then lies open in downward direction and a number of organs will be able to fall out of the abdomen 125. Driven by the conveyor belts positioned on both sides and confined upwards and possibly downwards the fish 120 arrives at the two cutting knives 130a, 130b, which are positioned in accordance to the driving discs according to the invention. With the sharp knives 130a, 130b which are provided with interruptions cutting takes place on both sides of the back-bone 121, so that the abdomen 125 with the back bone is loosened from the fillet meat 128a, 128b and can fall downwards in the direction B. After that the fillet meat 128a, 128b remains provided with the bones 122a, b, 123a, b, and possibly 124a, b too, that have been cut off from the back-bone 121.

With the device 101 according to the invention, after the belly 126 has been cut off from it in the manner described above by means of the horizontal cutting plane 127, the fish 120 (see figure 8) is brought in engagement with the toothed disc 104 rotating in direction U, by continuous conveyance by means of conveyor belts 103a, 103b. The toothed disc 104 can penetrate the abdomen in a symmetrical way here to finally engage at the lower side and on both sides of the backbone 121 with the teeth 107a, 107b. Possibly the teeth 107a, 107b considered in longitudinal direction can engage between consecutive bones.

The fish 120 is urged on by the conveyor belts 103a, 103b and the toothed disc 104 so that the front end of the backbone 121 situated at the beheaded front side of the fish comes just under the point 115 of the deboner 106 to be subsequently forced downwards along the concave front edge 129. The toothed disc 104 keeps the backbone in its place here, the backbone itself being loaded on pressure and being stabilized against buckling out. Here the bones 122a, 122b, 123a, 123b and possibly 124a, 124b too are pulled along downwards so that they are entirely or at least almost entirely driven within the space between the eviscerating discs 105a, 105b when these discs penetrate the fish 120. The edge 113 of the eviscerating disc 105a, 105b is sharp enough to go through the meat but blunt enough to keep bones, that are possibly encountered, in one piece, because the bone 121 forced downwards can pull these bones past the relatively blunt edge 113. As a result, rather than as a cutting means, the discs 105a, 105b function as a means to downwardly eviscerate the area of the abdomen 125 from the fish 120. The concave shape of the edge area 112 promotes the movement of the discs 105a, 105b in the fish, because less fillet meat 128a, 128b has to be forced aside during the activity.

## Claims

1. Skinning machine for fish pieces consisting of two fish fillets that are beheaded, initially connected to each other by means of the dorsal fin root, with or without tail, comprising means for skinning the fish fillets and means for conveying the fish pieces to and along the skinning means, the skinning means comprising a knife placed transverse to the conveyance direction above the conveyance means, as well as means placed just above the knife for engaging the skin of the fillet halves and pulling the skin along the knife in diverging directions in relation to each other with a horizontal directional component which is normal to the conveyance direction.

2. Skinning machine according to claim 1, the skin engaging means at least comprising a roll, which for each fillet half is provided with elevations that are oblique in relation to the conveyance direction.

3. Skinning machine according to claim 2, the elevations forming series for each fillet half, which series mutually include an angle between 1-179° opening in upstream direction.

4. Skinning machine according to claim 3, the enclosed angle being approximately 120°.

5. Skinning machine according to claim 2, 3 or 4, the series of elevations forming ribs.

6. Skinning machine according to any one of the claims 2-5, the elevations having a blunt engaging surface.

7. Skinning machine according to any one of the claims 2-6, the elevations for both fish fillets being situated in transverse direction at a distance from each other.

8. Skinning machine according to any one of the claims 2-7, the elevations for both fish fillets being arranged on one and the same roll, which roll has an axis of rotation which is normal to the conveyance direction.

9. Roll suitable and destined for the skinning machine of claim 8.

10. Skinning machine according to any one of the preceding claims, the means for engaging the skin of the fillet halves being driveable at a rotation speed which is equal to the conveyance speed of the conveyance means.

11. Method for skinning fish pieces consisting of two fish fillets that are beheaded, connected to each other by means of the dorsal fin root, with or without tail, the fish pieces being supplied lying on a conveyance device with the skin turned upwards to a knife arranged transverse to the conveyance direction and just above its conveyance surface, in which with the help of rotating engaging means the skin of the fish piece is engaged from above and pulled over the knife in direction which for each fillet half is obliquely sidewards and outwards to the conveyance direction.

12. Skinning machine provided with one or more of the characterizing measures described in the description and/or shown in the figures.
